# DEMANDE DE BREVET EUROPEEN

(11) **EP 0 955 196 A1**
(43) Date de publication de la demande: **10.11.1999**
(21) Numéro de dépôt: 99401118.7
(22) Date de dépôt: 07.05.1999
(51) Int. Cl.: B60J 7/06, B61D 39/00

(54) **Armature de bâche à arceaux de débâchage**

(30) Priorité: 07.05.1998 FR 9805801
(71) Demandeur: Edscha Mafca Components S.A.S, 28200 Châteaudun (FR)
(72) Inventeur: Dethare, Jean-Jacques, 28200 Châteaudun (FR)
(74) Mandataire: Bloch, Gérard

(57) **Abrégé**

L'armature (6) comprend une pluralité d'arceaux supports (7) montés pour être déplacés de l'un à l'autre de deux états de déploiement et de reploiement. Il est prévu une pluralité d'arceaux de débâchage (11) intercalés entre les arceaux supports (7) et accouplés à eux (15) pour être entraînés dans des mouvements ascendants et descendants respectivement lors des reploiements et déploiements des arceaux supports (7).

L'armature s'applique bien aux wagons de chemin de fer.

## Description

La présente invention concerne les armatures supports de bâches de couverture et de protection de charge contre les intempéries. Il peut s'agir notamment de la protection de marchandises stockées temporairement sur une surface de réception du type plateau de camion ou plate-forme de wagon et, plus généralement, tout plateau de véhicule ou d'autre engin de locomotion ou encore de la protection de toute surface de stockage, voire de toute aire de jeu.

Une armature de bâche doit pouvoir être utile aussi bien en position de couverture et de protection, bâche déployée, qu'en position de déversement de chargement, de dépose..., bâche reployée.

L'invention concerne plus particulièrement une armature à arceaux montés sur des chariots se déplaçant sur des rails s'étendant le long de la surface de réception.

Quand on découvre la surface en reployant l'armature, c'est-à-dire en repoussant les arceaux les uns contre les autres, il faut éviter d'affaler la bâche sur la charge, entre les arceaux. A cet effet, on connait les bras de rejet latéral de bâche, entre deux arceaux adjacents, constitués de deux tubes ceintrés chacun fixé à un des arceaux et reliés entre eux par un lien en caoutchouc. C'est une solution difficile à mettre en oeuvre et dont l'efficacité n'est pas parfaite.

L'invention de la présente demande vise à proposer une solution meilleure.

A cet effet, elle concerne une armature de bâche comprenant une pluralité d'arceaux supports montés pour être déplacés de l'un à l'autre de deux états de déploiement et de reploiement, caractérisée par le fait qu'il est prévu une pluralité d'arceaux de débâchage intercalés entre les arceaux supports et accouplés à eux pour être entraînés dans des mouvements ascendants et descendants respectivement lors des reploiements et déploiements des arceaux supports.

Les moyens d'accouplement transforment donc le mouvement rectiligne horizontal des arceaux supports en un mouvement rectiligne vertical des arceaux de débâchage.

Ainsi, quand on débâche, en repoussant les arceaux supports les uns contre les autres, la bâche ne peut pas se glisser entre eux puisque les arceaux de débâchage, en montant, la repoussent vers le haut.

De préférence, chaque arceau de bâchage est accouplé à deux arceaux supports voisins par un triangle articulé.

Dans ce cas, il est avantageux que chaque triangle articulé de transformation de mouvement associé à un arceau de débâchage comporte deux bielles chacune articulée à un arceau support et à l'arceau de débâchage.

L'invention sera mieux comprise à l'aide de la description suivante d'une forme de réalisation préférée de l'armature de l'invention, en référence au dessin annexé, sur lequel :
- la figure 1 représente une vue latérale d'un wagon de chemin de fer avec une armature de l'invention supportant une bâche;
- la figure 2 représente une vue en coupe transversale du wagon de la figure 1;
- les figures 3A et 3B représentent une vue latérale d'une portion d'armature, avec deux arceaux supports et un arceau de débâchage, en position déployée et en position reployée, respectivement, et
- les figures 4A et 4B représentent le dispositif de fixation de l'arceau de débâchage de la figure 1, en position déployée et en position reployée, respectivement.

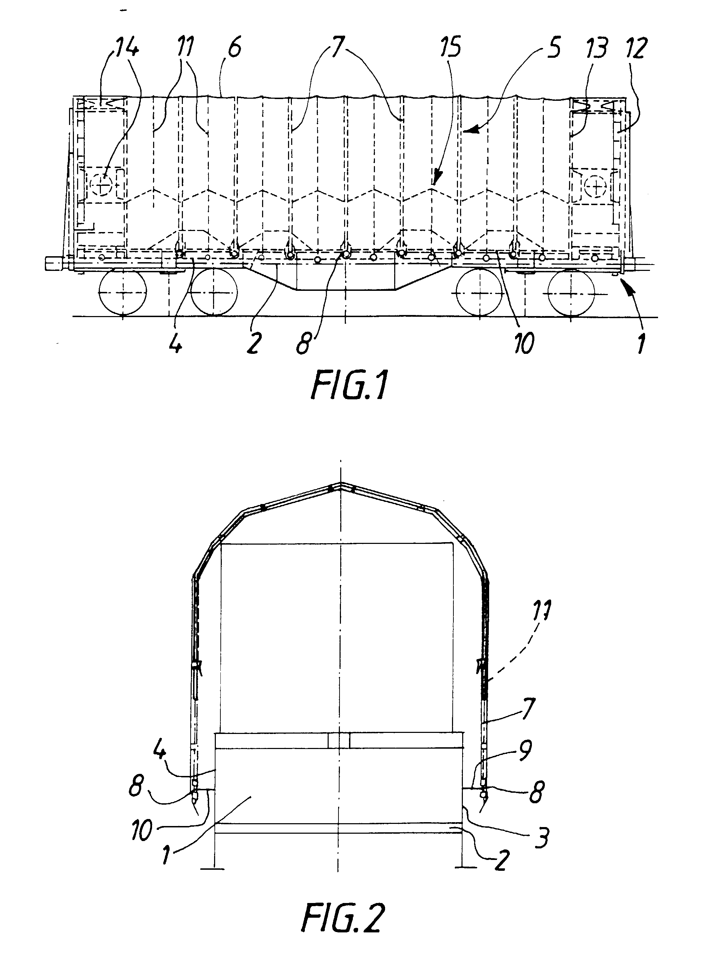

En référence aux figures 1 et 2, qui représentent ici un véhicule et plus particulièrement un wagon de chemin de fer, il est prévu, monté sur des roues, un châssis 1 avec une plate-forme 2 et des parois latérales 3, 4, châssis sur lequel est fixée une armature de bâche 5 supportant une bâche 6.

L'armature 5 comporte une pluralité d'arceaux supports 7 montés, par leurs extrémités, sur des chariots 8 eux-mêmes montés sur des rails 9, 10 fixés le long des parois 3, 4 du wagon.

Les chariots 8 peuvent glisser sur les rails 9, 10 si bien que les arceaux 7 peuvent être repoussés les uns contre les autres, pour reployer la bâche 6 ou, au contraire, être écartés les uns des autres, pour déployer la bâche 6 en position de couverture et de protection de marchandise disposée sur la plate-forme 2.

Pour éviter, quand on reploie la bâche 5, de l'affaler sur la marchandise, on a prévu d'intercaler entre les arceaux supports 7 des arceaux de débâchage 11.

L'armature 5 comportant des arceaux d'extrémité 12 et des arceaux anti-crabe 13, adjacents aux arceaux d'extrémité 12 et séparés d'eux par des raidisseurs 14, en plus des arceaux supports 7 proprement dits, il y a un arceau de débâchage 11 de plus que d'arceaux supports 7.

Les arceaux de débâchage 11 sont accouplés aux arceaux supports 7 (ou anti-crabe) voisins ici par des triangles articulés 15 de transformation du mouvement rectiligne des arceaux supports 7, le long des rails 9, 10, en un mouvement rectiligne vertical des arceaux de débâchage 11. En d'autres termes, quand on reploie les arceaux supports 7 les uns contre les autres, et qu'on reploie la bâche 6, on fait monter les arceaux de débâchage 11 qui repoussent la bâche 6 vers le haut et, inversement, quand on déploie les arceaux supports 7, on fait descendre la bâche 6. Grâce à cela, la bâche 6 ne descend pas en dessous du faîtage des arceaux supports 7.

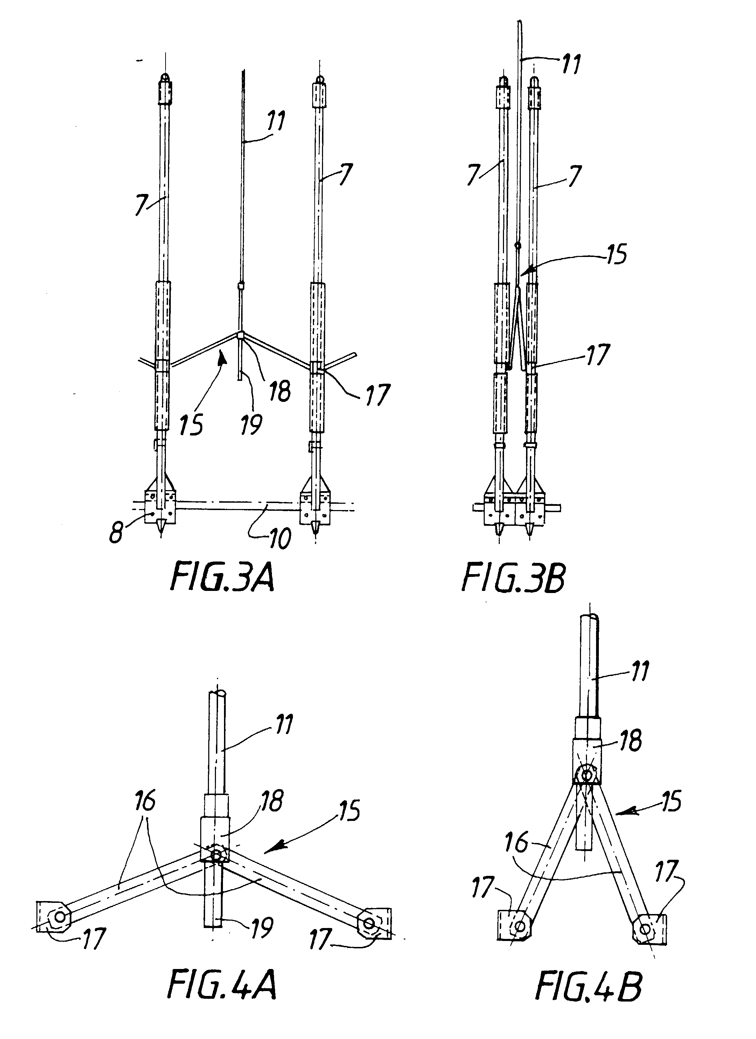

Chaque arceau de débâchage 11 est donc accouplé à deux arceaux supports 7 voisins par un triangle articulé 15. Un tel triangle comporte deux bielles 16 articulées par l'une de leurs extrémités sur des chapes 17 fixées sur les arceaux supports 7 et, par l'autre de leurs extrémités, à un manchon 18 fixé légèrement en deça d'une extrémité 19 de l'arceau de débâchage 11 associé. Quand on reploie les arceaux supports 7, on replie, ou ferme, les triangles 15 en réduisant l'angle entre leurs bielles 16 (figures 3B et 4B). Comme les chapes 17 restent à une même hauteur, les manchons 18, et donc les arceaux de débâchage 11 avec eux, sont obligés de monter. Quand on déploie les arceaux 11, on déplie, on ouvre, les triangles 15 (figures 3A, 4A), en faisant descendre les manchons 18 et les arceaux de débâchage 11.

## Revendications

1. Armature de bâche (6) comprenant une pluralité d'arceaux supports (7) montés pour être déplacés de l'un à l'autre de deux états de déploiement et de reploiement, caractérisée par le fait qu'il est prévu une pluralité d'arceaux de débâchage (11) intercalés entre les arceaux supports (7) et accouplés à eux (15) pour être entraînés dans des mouvements ascendants et descendants respectivement lors des reploiements et déploiements des arceaux supports (7).

2. Armature selon la revendication 1, dans laquelle des moyens d'accouplement (15) sont agencés pour transformer le mouvement rectiligne horizontal des arceaux supports (7) en un mouvement rectiligne vertical des arceaux de débâchage (11).

3. Armature selon la revendication 2, dans laquelle chaque arceau de bâchage (11) est accouplé à deux arceaux supports (7) voisins par un triangle articulé (15).

4. Armature selon la revendication 3, dans laquelle chaque triangle articulé (15) de transformation de mouvement associé à un arceau de débâchage (11) comporte deux bielles (16) chacune articulée à un arceau support (7) et à l'arceau de débâchage (11).
